# EUROPÄISCHE PATENTANMELDUNG

(11) **EP 0 682 273 A1**
(43) Veröffentlichungstag der Anmeldung: **15.11.1995**
(21) Anmeldenummer: 95106690.1
(22) Anmeldetag: 04.05.1995
(51) Int. Cl.: G02B 6/245

(54) **Schneidwerkzeug**

(30) Priorität: 13.05.1994 DE 4416817
(71) Anmelder: REHAU AG + Co, 95111 Rehau (DE)
(72) Erfinder: Beyer, Wolfgang, D-95111 Rehau (DE)

(57) **Zusammenfassung**

Die Erfindung betrifft ein Schneidwerkzeug zum beliebigen Öffnen von Glasfaserbündeladerhüllen zur Freilegung der innenliegenden Lichtleiter. Erfindungsgemäß wird ein Führungselement (31, 32) mit Führungsnut (311, 321) für die Glasfaserbündeladerhüllen (1) verwendet. An dem Führungselement (31, 32) ist eine Messerklinge (2) festlegbar. Die Schneidkante (22) dieser Messerklinge (2) ragt mit ihren Enden über die begrenzende Breite der Führungsnut (311, 321) hinaus und haltert die Glasfaserbündeladerhülle (1) in der Führungsnut (311, 321)

## Beschreibung

Die Erfindung betrifft ein Schneidwerkzeug zum beliebigen Öffnen von Glasfaserbündeladerhüllen zur Freilegung der innenliegenden Lichtwellenleiter.

Bei der Montage von Glasfaserkabeln in Muffen oder Anschlußgehäusen ist es notwendig, die einzelnen Lichtwellenleiter von den schützenden Hüllen zu befreien. Dazu wird zum einen der äußere Kabelmantel, der in der Regel aus Polyethylen besteht, mit Kabelmantelschneidern mindestens einmal in Längsrichtung aufgeschnitten und bis zur gewünschten Absetzlänge abgeschält.

Bei Bündeladern muß dann noch die zusätzliche Schutzhülle aus Kunststoff, in die das Lichtwellenleiter-Bündel eingebettet ist, entfernt werden, um die einzelnen Lichtwellenleiter freizulegen. Um genügend Faservorrat zum Verbinden einzelner Fasern zu erhahalten, muß die Schutzhülle auf ca. 1,6 m abgesetzt werden.

Hierzu wird die Schutzhülle eventuell geglättet und dann in Abständen von jeweils etwa 30-40 cm mit einem Rundschnitt eingekerbt, dann abgebrochen und über das freie Ende des Lichtwellenleiter-Bündels abgezogen. Für eine Absetzlänge von insgesamt 1,6 m muß dieser Vorgang ca. vier- bis fünfmal durchgeführt werden.

Der Nachteil dieses Vorgehens ist darin zu sehen, daß die Messerspitze oder Messerschneide beim Auftrennvorgang in die Schutzhülle eindringen kann und dadurch die Gefahr besteht, daß die innerhalb der Schutzhülle gelagerten Lichtwellenleiter partiell verletzt bzw. eingekerbt werden. Ein weiterer Nachteil wird in dem mehrfach zu wiederholenden Rundschnitt gesehen, der bei dem bekannten Arbeitsvorgang zur Erzielung der Absetzlänge erforderlich ist.

Hier setzt die Erfindung ein, die es sich zur Aufgabe gestellt hat, die Nachteile des Standes der Technik zu vermeiden und ein Schneidwerkzeug für Glasfaserkabel anzugeben, bei dem eine Verletzung einzelner Lichtwellenleiter beim Schneidvorgang praktisch ausgeschlossen ist und die Freilegung der Lichtwellenleiter vereinfacht wird.

Erfindungsgemäß wird dazu vorgeschlagen, daß wenigstens ein Führungselement mit Führungsnut für die Glasfaserbündeladerhülle vorgesehen ist, an dem eine Messerklinge festgelegt ist, deren Schneidfläche mit ihren Enden über die begrenzende Führungsnutbreite hinausragt und in Zusammenwirken mit der Führungsnut die Glasfaserbündeladerhülle in der Führungsnut haltert.

Mit Hilfe dieser Vorrichtung ist es möglich, die Schutzhülle der Bündeladern von Glasfaserkabeln leicht und über große Längen in einem Arbeitsgang zu entfernen. Ein schrittweises Abziehen der Schutzhülle - wie nach dem Stand der Technik erforderlich - ist damit nicht mehr notwendig.

Beim Herausnehmen der Lichtwellenleiterbündel aus der gelgefüllten, längs aufgeschlitzten Schutzhülle werden nur sehr geringe Zugkräfte auf die einzelnen Lichtwellenleiterfasern ausgeübt. Weiterhin ist es möglich, mit der erfindungsgemäßen Vorrichtung nur Teilbereiche der Schutzhülle zu öffnen. Diese Teilbereiche können sich an beliebiger Stelle der Schutzhülle befinden, so daß ein Zerschneiden des Lichtwellenleiterbündels und ein Abziehen der rund- und längsgeschnittenen Teilstücke zur Erzielung der gewünschten Absetzlänge nicht mehr erforderlich ist. Mit dem erfindungsgemäßen Werkzeug läßt sich vielmehr ein Zugang zu den einzelnen Lichtwellenleitern schaffen, ohne daß die Bündelader komplett durchtrennt werden müßte, so daß die Möglichkeit besteht, einzelne Lichtwellenleiter aus dem Bündel zu separieren, um sie zu schneiden oder aus der Schutzhülle herauszuziehen.

Durch die Tatsache, daß die Schneidfläche mit ihren Enden über die begrenzende Führungsnutbreite hinausragt, besteht bei dem erfindungsgemäßen Werkzeug nicht die Gefahr, daß eine Spitze des Schneidwerkzeugs mit tangentialer Schneidwirkung in das Innere des Lichtwellenleiterbündels eindringt und dort vorhandene Lichtwellenleiter beschädigt oder zerstört.

Es hat sich als vorteilhaft erwiesen, daß die Schneidkante der Messerklinge eine gebogene Form aufweist. In dieser Form ähnelt die Messerklinge einem Hohleisen mit angeschliffener Klinge, bei dem die Enden der Schneidfläche ebenfalls über den aktiven Schneidbereich hinausragen. Durch diese spezielle Formung der Schneidkante ist die Breite des herausgetrennten Bereichs der Schutzhülle in weiten Grenzen frei wählbar. Eine Beschädigung der Lichtwellenleiter in der Schutzhülle ist bei dieser Schneidenform nicht möglich, da der Schliff der Schneide zwar die Schutzhülle an zwei Längsbereichen auftrennt und den dazwischenliegenden Teil der Schutzhülle abschält, ohne daß dabei jedoch die eigentliche Schneidkante mit den eingelagerten Lichtwellenleitern in schneidende Berührung treten könnte. Vielmehr gleitet aufgrund einer vorgegebenen Winkelstellung der Schneidkante der in die Schutzhülle eingedrungene Teilbereich des Werkzeugs durch die Gelfüllung, in die die Lichtwellenleiter eingelagert sind, und drückt diese allenfalls tiefer in die Gelfüllung hinein, ohne sie jedoch zu beschädigen.

Die Schneidkante der Messerklinge steht während des Schneidvorgangs vorteilhaft in einem Anstellwinkel zwischen -5° und 10°. Hierbei kann das Schneidverzeug beim Anschnitt in einem Winkel von 90° zur Längsachse der Schutzhülle stehen und kann danach zur Durchführung des Längsschnittes in den Anstellwinkel zwischen -5° und 10° verschwenkt werden. Bei der Beendigung des Schneidvorgangs wird dann der Anstellwinkel zwischen 0° und -10° gewählt, um die Schneidkante der Messerklinge damit aus dem Schneidbereich der Schutzhülle herausfahren zu können.

Die Schnittiefe der Messerklinge in die Schutzhülle kann über ein Klemmelement eingestellt werden. Diese Schnittiefe wird vorteilhaft so eingestellt werden, daß wenigstens die Wanddicke der Schutzhülle durch die Messerklinge abgehoben wird, wodurch der Zugang zum Inneren der Schutzhülle und den dort befindlichen Lichtwellenleitern ermöglicht wird. Hierbei ist es vorteilhaft, daß ca. 1/3 des Schutzhüllendurchmessers als Span abgehoben wird.

In einer besonderen Ausführungsform besitzt das Schneidwerkzeug der Erfindung zwei gegeneinander verschwenkbare obere und untere Führungselemente, wovon wenigstens ein Führungselement mit einem Griffteil verbunden ist. Die Führungselemente umfassen mit ihren Führungsnuten die runde Glasfaserbündeladerhülle, wobei die Messerklinge an einem der Führungselemente im vorderen Bereich angeordnet ist. Dieser Aufbau bringt den Vorteil, daß die Glasfaserbündeladerhülle in die Führungsnuten der Führungselemente eingesetzt werden wobei das Schneidwerkzeug bei geschlossenen Führungselementen auf dem äußeren Umfang der Glasfaserbündeladerhülle verschieblich ist.

In einer anderen Ausführungsform wird bei der Verwendung von nur einem Führungselement die Führungsnut mit ihrer Öffnung um annähernd 180° zur Schneidebene versetzt und die Messerklinge am oberen Ende des Führungselementes derart angeordnet, daß durch Abwinkeln des Führungselementes gegen die Achse der Glasfaserbündeladerhülle diese zwischen Führungsnut und Messerklinge eingeklemmt ist. Auch mit diesem vereinfachten Aufbau des erfindungsgemäßen Schneidwerkzeugs lassen sich die beschriebenen Einschnitte in die Schutzhülle durchführen, ohne daß die Lichtwellenleiter der Gefahr der Beschädigung ausgesetzt würden.

Die Führungselemente sind in ihrem Haltebereich so aufgebaut, daß die Führungsnut in ihrer Nuttiefe maximal dem kleinsten Radius der einzuführenden Glasfaserbündeladerhülle entspricht.

In einer anderen Version entspricht die Führungsnut eines Führungselementes in ihrer lichten Breite maximal dem größten Durchmesser der einzuführenden Glasfaserbündeladerhülle. Auf diese Weise lassen sich Toleranzen im Durchmesser der Glasfaserbündelhülle leicht auffangen und es lassen sich sogar Glasfaserbündelhüllen mit verschiedenen Durchmessern mit diesen Werkzeugen bearbeiten. Die beiden Führungselemente können, zum Ausgleich von Durchmesserunterschieden, auch mittels einstellbarem Federdruck gegeneinandergepresst werden oder so ausgebildet sein, daß die beiden Führungselemente kammartig ineinandergreifen und die Führungsnuten dabei so geformt sind, daß auch bei größeren Toleranzen des Bündeladerdurchmessers die Bündelader spielfrei umfaßt wird und so immer eine exakte Führung gewährleistet ist.

Schließlich kann an einem der Führungselemente ein einstellbarer Anschlag als Schneidlängenbegrenzung angeordnet sein. Dieser Anschlag kann so wirken, daß nach Beendigung der gewünschten Schneidlänge die Messerklinge automatisch durch Winkelverstellung aus der Schneidebene herausgefahren wird.

Das Schneidwerkzeug kann auch als in einem zwangsgeführten Reiter angeordnete Messerklinge ausgebildet sein. Dabei wurden zwei Formhälften als Führungselemente verwendet, in deren Anlageflächen die Führungsnuten ausgearbeitet sind, die die Glasfaserbündeladerhülle umfassen. Eine vollumfängliche Umfassung erfolgt jedoch nur in den Endbereichen der Führungselemente, während zwischen diesen Endbereichen nur eine Teilumfassung erfolgt.

Der Bereich der Teilumfassung bestimmt die freie Schnittiefe der Messerklinge in die Glasfaserbündeladerhülle. Die Messerklinge selbst ist mit einem Anstellwinkelbereich von 70° bis -10° an dem verschwenkbaren Reiter befestigt, der seinerseits derart mit den Führungselementen verbunden ist, daß eine seitliche Reiterbewegung ausgeschlossen ist.

Die Schnittiefe der Messerklinge wird durch die zwischen den Endbereichen der Führungselemente stattfindende Teilumfassung der Glasfaserbündeladerhülle begrenzt.

Der besondere Vorteil des Arbeitens mit dem erfindungsgemäßen Schneidwerkzeug wird darin gesehen, daß bei der Nutzung nur einzelner Lichtwellenleiterfasern nicht mehr das gesamte Lichtwellenleiterbündel über seinen Querschnitt abgetrennt werden muß, um an die gewünschten Fasern heranzukommen, sondern daß nach dem Längsöffnen der Schutzhülle die gewünschten Lichtwellenleiterfasern aus dem Lumen des Bündels herausgenommen werden können, ohne daß auch die anderen noch in diesem Lumen befindlichen Lichtwellenleiterfasern geschnitten werden müßten.

In der Zeichnung sind Ausführungsbeispiele des erfindungsgemäßen Schneidwerkzeugs schematisch dargestellt.

Es zeigt:
Fig.1 ein Lichtwellenleiterfaserbündel mit den drei angedeuteten Schnittstellen der Messerklinge.
Fig.2 das Schneidwerkzeug mit zwei Führungselementen
Fig.3 den Querschnitt durch ein Lichtwellenleiterbündel mit eingetauchter Messerklinge.
Fig.4 das Schneidwerkzeug als zwangsgeführter Reiter

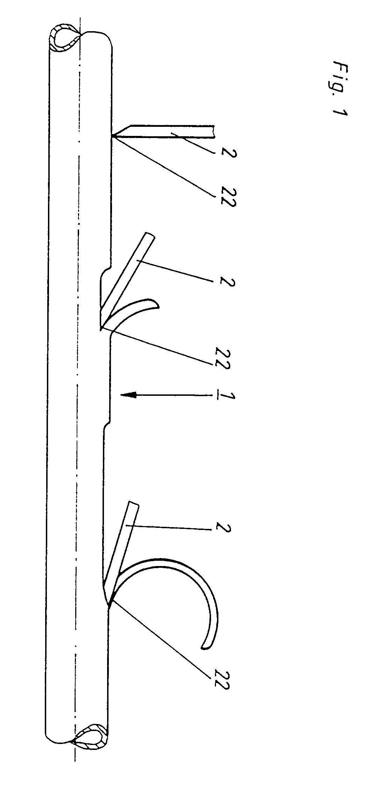

Fig.1 zeigt die Glasfaserbündeladerhülle 1 in einem Teilstück. Im linken Bereich der Darstellung ist der Anschnitt der Hülle simuliert, wobei die Messerklinge 2 in einem Schnittwinkel bis zu 90° angestellt ist.

Im mittleren Bereich ist die Messerklinge 2 für die Durchführung des Längsschnittes in einen Anstellwinkel zwischen -5° und 10° verschwenkt. Dieser Anstellwinkel der Messerklinge 2 ist im rechten Bereich für den Trennschnitt auf kleiner 0°, nämlich zwischen 0° bis -10° eingestellt.

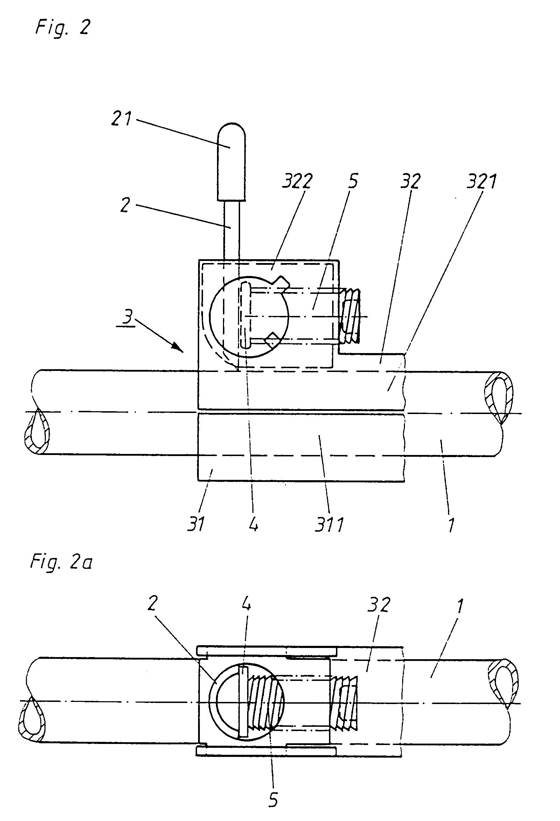

In Fig.2 ist das Schneidwerkzeug 3 mit den beiden Führungselementen 31, 32 gezeigt. Die Schutzhülle 1 ist zwischen diesen beiden Führungselementen 31, 32 eingesetzt und befindet sich in den strichliert angedeuteten Führungsnuten 311, 321.

Das Führungselement 32 besitzt einen Aufbau 322, in dem die Messerklinge 2 in Pfeilrichtung schwenkbar gehaltert ist. An die Messerklinge 2 ist ein Handgriff 21 angebracht, um die Handhabung zu erleichtern. Die Messerklinge 2 ist in ihrem Sitz über eine Druckplatte 4 gehaltert, die ihrerseits über die Feststellschraube 5 feststellbar ist.

Fig. 2a zeigt die Anordnung nach Fig.2 in Draufsicht, wobei gleiche Elemente gleiche Bezugszeichen erhalten haben.

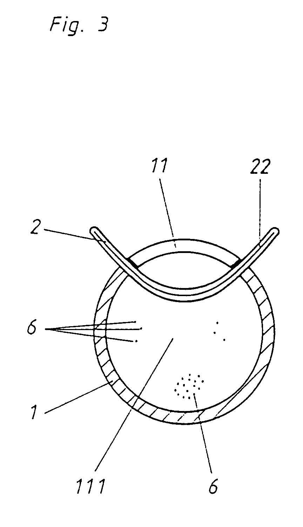

Fig. 3 zeigt die Schutzhülle 1 mit den verschiedenen Lichtwellenleiter fasern 6, die im Lumen 111 der Schutzhülle in einer Gelfüllung gelagert sind.

Im oberen Bereich der Schutzhülle 1 ist die Messerklinge 2 derart eingetaucht, daß die Schneidkante 22 in Form eines Doppelschnittes den oberen Bereich 11 der Schutzhülle abhebt. Dabei wird daß die Schneidkante der Messerklinge die einzelnen Lichtwellenleiterfasern nicht direkt berühren kann, sondern daß der nicht schneidfähige Bereich der Messerklinge allenfalls auf einer in der Nähe der Schneide verlaufenden Lichtwellenleiterfaser gleitet. Durch diesen Gleitvorgang wird die entsprechende Faser nicht beschädigt oder zerstört, sondern vielmehr tiefer in die Gelfüllung hineingedrückt.

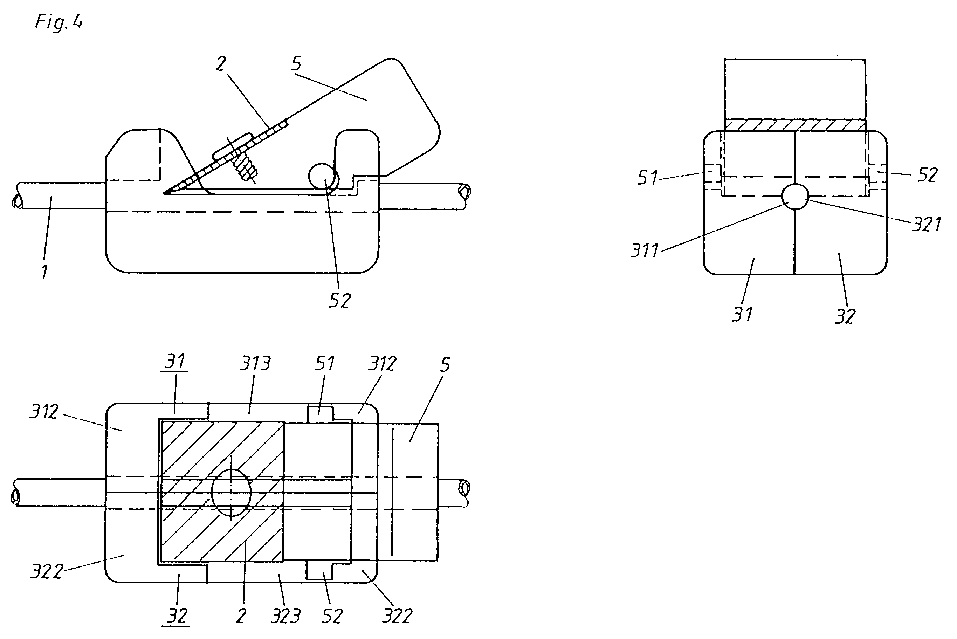

Fig.4 zeigt das Schneidwerkzeug in Form eines zwangsgeführten Reiters. Die gegeneinander anstellbaren Führungselemente 31, 32 umfassen mit ihren Führungsnuten 311, 321 die Glasfaserbündeladerhülle, und zwar nur in den Endbereichen 312, 322 vollumfänglich.

Im mittleren Bereich 313, 323 ist die Glasfaserbündeladerhülle im oberen Drittel freiliegend und nicht von den Führungsnuten 311, 321 umfaßt. Die Messerklinge 2 ist an dem in einem Anstellwinkel von 70° bis -10° verschwenkbaren Reiter 5 befestigt, welcher über Führungen 51, 52 so mit den Führungselementen 31, 32 verbunden daß eine seitliche Bewegung des Reiters 5 verhindert wird. Die Schnittiefe der Messerklinge 2 wird bei diesem Aufbau durch den nach oben frei liegenden, nicht von den Führungsnuten 311, 321 umfaßten Bereich der Glasfaserbündeladerhülle zwischen den Endbereichen 312, 322 begrenzt.

## Patentansprüche

1. Schneidwerkzeug zum beliebigen Öffnen von Glasfaserbündeladerhüllen zur Freilegung der innenliegenden Lichtwellenleiter, gekennzeichnet durch wenigstens ein Führungselement (31, 32) mit Führungsnut (311, 321) für die Glasfaserbündeladerhülle (1) und eine an dem Führungselement (31, 32) festlegbare Messerklinge (2), deren Schneidkante (22) mit ihren Enden über die begrenzende Breite der Führungsnut (311, 321) hinausragt und die Glasfaserbündeladerhülle (1) in der Führungsnut (311, 321) haltert.

2. Schneidwerkzeug nach Anspruch 1, dadurch gekennzeichnet, daß die Schneidkante (22) der Messerklinge (2) eine gebogene Form aufweist.

3. Schneidwerkzeug nach Anspruch 1, dadurchgekennzeichnet, daß die Schneidkante (22) der Messerklinge (2) in einem einstellbaren Anstellwinkel zur Achse der Glasfaserbündeladerhülle (1) festlegbar ist.

4. Schneidwerkzeug nach Anspruch 1, dadurch gekennzeichnet, daß die Schnittiefe der Schneidkante (22) der Messerklinge (2) in die Glasfaserbündeladerhülle (1) über eine mit einer Klemmschraube (5) versehene Druckplatte (4) einstellbar ist.

5. Schneidwerkzeug nach Anspruch 1, gekennzeichnet durch zwei gegeneinander verschwenkbare Führungselemente (31, 32), wovon wenigstens ein Führungselement (32) ein Griffteil besitzt und wobei die Führungselemente (31, 32) mit ihren Führungsnuten (311, 321) die runde Glasfaserbündeladerhülle (1) umfassen und die Messerklinge (2) am Führungselement (32) angeordnet ist.

6. Schneidwerkzeug nach Anspruch 1, dadurch gekennzeichnet, daß bei der Verwendung von nur einem Führungselement (31) die Führungsnut (311) mit ihrer Öffnung um annähernd 180° zur Schneidebene der Messerklinge (2) versetzt und die Messerklinge (2) am oberen Ende des Führungselementes (31) derart angeordnet daß durch Abwinkeln des Führungselementes (31) gegen die Achse der Glasfaserbündeladerhülle (1) diese zwischen Führungsnut (311) und der Messerklinge (2) eingeklemmt ist.

7. Schneidwerkzeug nach Anspruch dadurch gekennzeichnet, daß die Führungsnuten (311, 321) der Führungselemente (31, 32) in ihrer Nuttiefe maximal dem unteren Toleranzbereich des Radius der einzuführenden Glasfaserbündeladerhülle (1) entspricht.

8. Schneidwerkzeug nach Anspruch 1, dadurch gekennzeichnet, daß die Führungsnuten (311, 321) der Führungselemente (31, 32) in ihrer lichten Breite maximal dem oberen Toleranzbereich des Durchmesser der einzuführenden Glasfaserbündeladerhülle (1) entspricht.

9. Schneidwerkzeug nach Anspruch 1, gekennzeichnet durch zwei gegeneinander anstellbare Führungselemente (31, 32) welche mit ihren Führungsnuten (311, 321) die Glasfaserbündeladerhülle (1) teilweise und an den Endbereichen (312, 322) der Führungselemente (31, 32) vollumfänglich umfassen, daß die Messerklinge (2) an einem im Anstellwinkelbereich von 70° bis -10° verschwenkbaren Reiter (5) befestigt ist, welcher über Führungen (51, 52) seitenbewegungsfrei mit den Führungselementen (31, 32) verbunden ist, und daß die Schnittiefe der Messerklinge (2) durch die teilweise Umfassung der Glasfaserbündeladerhülle im Mittelbereich (313, 323) der Führungselemente (31, 32) begrenzt ist.
